# EUROPEAN PATENT APPLICATION

(11) **EP 4 607 760 A1**
(43) Date of publication of application: **27.08.2025**
(21) Application number: 23879859.9
(22) Date of filing: 19.10.2023
(51) Int. Cl.: H02K 1/22, F04D 13/00, F04D 13/06, F04D 13/08, F04D 29/00, H02K 7/14

(54) **PUMP DEVICE FOR LIQUEFIED GAS**

(30) Priority: 20.10.2022 JP 2022168220; 04.07.2023 JP 2023110126
(71) Applicant: EBARA CORPORATION, Ota-ku, Tokyo 144-8510 (JP)
(72) Inventor: HONDA, Shuichiro, Tokyo 144-8510 (JP); MATAKE, Kozo, Tokyo 144-8510 (JP)
(74) Representative: Pritzlaff, Stefanie Lydia
(86) International application number: PCT/JP2023/037825
(87) International publication number: WO 2024/085216

(57) **Abstract**

The present invention relates to a pump apparatus for delivering cryogenic liquefied gas, such as liquid hydrogen or liquefied natural gas, and in particular to a pump apparatus having an electric motor as a driving source for a pump. The pump apparatus includes a pump (1) having an impeller (2), a rotational shaft (5) to which the impeller (2) is fixed, and an electric motor (7) for rotating the rotational shaft (5) and the impeller (1). A rotor assembly (21) of the electric motor (7) includes a motor rotor (40) fixed to the rotational shaft (5), side rings (41) arranged at both sides of the motor rotor (40), and a hermetic cover (42) fixed to outer circumferential surfaces of the side rings (41). The hermetic cover (42) is made of glass fiber.

## Description

### Technical Field

The present invention relates to a pump apparatus for delivering cryogenic liquefied gas, such as liquid hydrogen or liquefied natural gas, and more particularly to a pump apparatus having an electric motor as a drive source for a pump.

### Background Art

In recent years, there has been an increasing demand for a pump apparatus for delivering cryogenic liquid, such as liquid hydrogen (having a boiling point of -253°C) or liquefied natural gas ((having a boiling point of -160°C) in order to reduce carbon dioxide emission. For example, liquid hydrogen may be used as fuel for power-generation gas turbine that does not emit carbon dioxide, and may be used as fuel for aircraft engine.

The liquefied gas, such as liquid hydrogen or liquefied natural gas, has an extremely small specific gravity, and therefore a pump apparatus for the liquefied gas is required to rotate at a high speed. In particular, in aircraft engines that require high discharge pressure and in applications that require compact pump apparatus, the rotation speed of the pump apparatus can reach tens of thousands of min⁻¹.

The pump apparatus generally includes a pump having an impeller and an electric motor for rotating the impeller. As the impeller rotates, the liquefied gas is sucked into the pump, pressurized by the rotation of the impeller, and discharged from the pump. A part of the pressurized liquefied gas flows into a motor chamber in which the electric motor is disposed, filling the motor chamber. Therefore, the electric motor is immersed in the liquefied gas.

### Citation List

### Patent Literature

Patent document 1: Japanese laid-open patent publication No. H09-19093

### Summary of Invention

### Technical Problem

However, a material used for a motor rotor of the electric motor is brittle against the liquefied gas, and a strength of the motor rotor in contact with the liquefied gas may decrease over time. In addition, as described above, the motor rotor rotates at an extremely high speed. Therefore, a large centrifugal force is applied to the motor rotor, and a large stress is generated in the motor rotor. As a result, a part of the motor rotor may be deformed or broken.

Therefore, the present invention provides a pump apparatus having a structure that isolates a motor rotor from liquefied gas and can reinforce a mechanical strength of the motor rotor that rotates at an ultra-high speed.

### Solution to Problem

In an embodiment, there is provided a pump apparatus for liquefied gas, comprising: a pump having an impeller; a rotational shaft to which the impeller is fixed; and an electric motor configured to rotate the rotational shaft and the impeller, the electric motor including: a rotor assembly that is rotatable together with the rotational shaft; and a motor stator having coils and a stator core surrounding the rotor assembly, the rotor assembly including: a motor rotor fixed to the rotational shaft; side rings disposed at both sides of the motor rotor; and a hermetic cover fixed to outer circumferential surfaces of the side rings, the hermetic cover being made of glass fiber.

In an embodiment, the side rings are made of glass fiber.

In an embodiment, the pump apparatus further comprises: balance rings arranged outwardly of the side rings, respectively, in an axial direction of the rotational shaft; and a non-magnetic metal cover fixed to outer peripheral surfaces of the balance rings, wherein the non-magnetic metal cover and the balance rings form a sealed space in which the hermetic cover, the side rings, and the motor rotor are disposed.

In an embodiment, the pump apparatus further comprises coil protective covers disposed radially inwardly of ends of the coils, the coil protective covers being made of a non-metallic material.

In an embodiment, there is provided a pump apparatus for liquefied gas, comprising: a pump having an impeller; a rotational shaft to which the impeller is fixed; and an electric motor configured to rotate the rotational shaft and the impeller, the electric motor including: a rotor assembly that is rotatable together with the rotational shaft; and a motor stator having coils and a stator core surrounding the rotor assembly, the rotor assembly including: a motor rotor fixed to the rotational shaft; balance rings disposed at both sides of the motor rotor; a hermetic cover fixed to outer peripheral surfaces of the balance rings; and a cylindrical reinforcing cover disposed on an outer peripheral surface of the hermetic cover, the hermetic cover being made of a non-magnetic metal, and the cylindrical reinforcing cover being made of glass fiber.

In an embodiment, both ends of the cylindrical reinforcing cover are located inwardly of the balance rings in an axial direction of the rotational shaft.

In an embodiment, the motor rotor includes a plurality of rotor bars arranged along a circumferential direction of the rotational shaft, and end rings fixed to both ends of the plurality of rotor bars, and both ends of the cylindrical reinforcing cover are located inwardly of the end rings in the axial direction of the rotational shaft.

In an embodiment, the pump apparatus further comprises side rings arranged at both sides of the motor rotor, wherein the motor rotor has a plurality of permanent magnets arranged along a circumferential direction of the rotational shaft, and the side rings are made of a non-metallic material.

In an embodiment, the side rings are made of glass fiber.

In an embodiment, the pump apparatus further comprises coil protective covers disposed radially inwardly of ends of the coils, the coil protective covers being made of a non-metallic material.

In an embodiment, there is provided a pump apparatus for liquefied gas, comprising: a pump having an impeller; a rotational shaft to which the impeller is fixed; and an induction motor configured to rotate the rotational shaft and the impeller, the induction motor including: a rotor assembly that is rotatable together with the rotational shaft; and a motor stator having coils and a stator core surrounding the rotor assembly, the rotor assembly including: a motor rotor having a plurality of rotor bars and end rings, the plurality of rotor bars being arranged along a circumferential direction of the rotational shaft, the end rings being coupled to both ends of the plurality of rotor bars; balance rings in contact with the end rings, respectively; first reinforcing covers surrounding outer circumferential surfaces of the end rings, respectively; and a second reinforcing cover surrounding the plurality of rotor bars.

In an embodiment, the first reinforcing covers are made of glass fiber.

In an embodiment, the second reinforcing cover is made of glass fiber.

In an embodiment, a thickness of each of the first reinforcing covers is larger than a thickness of the second reinforcing cover.

In an embodiment, the second reinforcing cover is made of a non-magnetic metal, and the second reinforcing cover is fixed to the balance rings.

### Advantageous Effects of Invention

The hermetic cover and the side ring form a sealed space in which the motor rotor is disposed. Therefore, the hermetic cover and the side ring can protect the motor rotor from the liquefied gas or its boil-off gas present in the motor chamber of the electric motor. In addition, the hermetic cover made of glass fiber can reinforce the mechanical strength of the motor rotor. Therefore, when a large centrifugal force is applied to the motor rotor rotating at an ultra-high speed, the hermetic cover can prevent deformation and damage of each member constituting the motor rotor.

The hermetic cover and the balance ring form a sealed space in which the motor rotor is placed. Therefore, the hermetic cover and the balance ring can protect the motor rotor from the liquefied gas or its boil-off gas present in the motor chamber of the electric motor. In addition, the cylindrical reinforcing cover made of glass fiber can reinforce the mechanical strength of the motor rotor. Therefore, when a large centrifugal force is applied to the motor rotor rotating at an ultra-high speed, the cylindrical reinforcing cover can prevent deformation and damage of each member constituting the motor rotor.

The first reinforcing cover, the second reinforcing cover, and the balance ring can protect the motor rotor from the liquefied gas or its boil-off gas present in the motor chamber of the electric motor. In addition, the first reinforcing cover and the second reinforcing cover made of non-magnetic material can reinforce the mechanical strength of the motor rotor. Therefore, when a large centrifugal force is applied to the motor rotor rotating at an ultra-high speed, the first reinforcing cover and the second reinforcing cover can prevent deformation and damage of the end rings and rotor bars constituting the motor rotor.

### Brief Description of Drawings

[FIG. 1] FIG. 1 is a cross-sectional view showing an embodiment of a pump apparatus for delivering liquefied gas;
[FIG. 2] FIG. 2 is an enlarged cross-sectional view showing a part of the pump apparatus shown in FIG. 1;
[FIG. 3] FIG. 3 is a cross-sectional view of a rotor assembly shown in FIG. 2;
[FIG. 4] FIG. 4 is an enlarged cross-sectional view showing a part of a pump apparatus according to another embodiment;
[FIG. 5] FIG. 5 is an enlarged cross-sectional view showing a part of a pump apparatus according to still another embodiment;
[FIG. 6] FIG. 6 is an enlarged cross-sectional view showing a part of a pump apparatus according to still another embodiment;
[FIG. 7] FIG. 7 is a cross-sectional view of a rotor assembly shown in FIG. 6;
[FIG. 8] FIG. 8 is an enlarged cross-sectional view showing a part of a pump apparatus according to still another embodiment;
[FIG. 9] FIG. 9 is an enlarged cross-sectional view showing a part of a pump apparatus according to still another embodiment;
[FIG. 10] FIG. 10 is an enlarged cross-sectional view showing a part of a pump apparatus according to still another embodiment;
[FIG. 11] FIG. 11 is a diagram showing an embodiment in which a non-magnetic metal cover described with reference to FIG. 4 is applied to the embodiment described with reference to FIG. 10;
[FIG. 12] FIG. 12 is an enlarged cross-sectional view showing a part of a pump apparatus according to still another embodiment;
[FIG. 13] FIG. 13 is a diagram showing an embodiment in which a coil protection cover described with reference to FIG. 5 is applied to the embodiment described with reference to FIG. 12;
[FIG. 14] FIG. 14 is an enlarged cross-sectional view showing a part of a pump apparatus according to still another embodiment;
[FIG. 15] FIG. 15 is a diagram showing an embodiment in which the coil protection cover described with reference to FIG. 5 is applied to the embodiment described with reference to FIG. 14;
[FIG. 16] FIG. 16 is a diagram showing yet another embodiment of a pump apparatus;
[FIG. 17] FIG. 17 is a diagram showing yet another embodiment of a pump apparatus;
[FIG. 18] FIG. 18 is a diagram showing yet another embodiment of a pump apparatus; and
[FIG. 19] FIG. 19 is a diagram showing yet another embodiment of a pump apparatus.

### Description of Embodiments

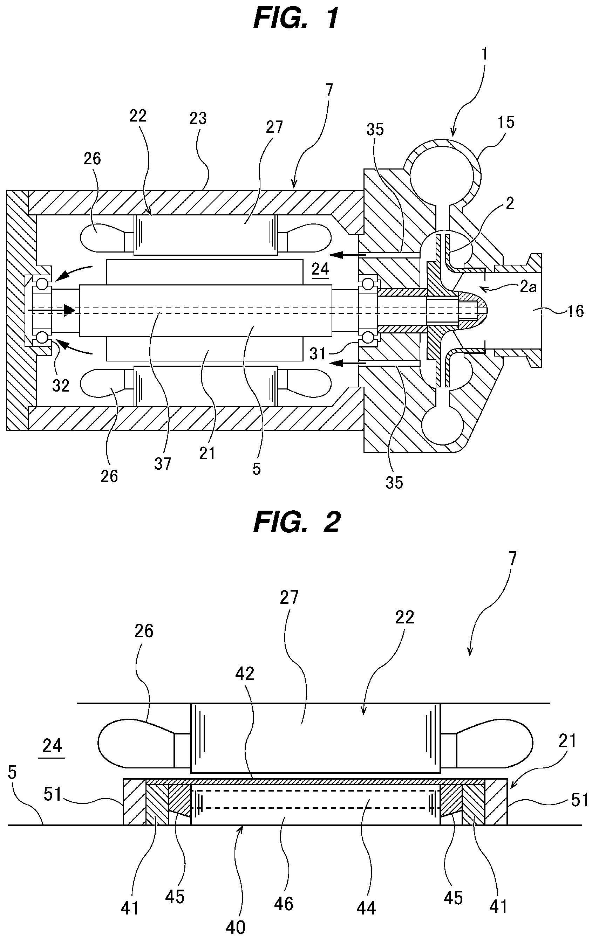

Hereinafter, embodiments of the present invention will be described with reference to the drawings. FIG. 1 is a cross-sectional view showing an embodiment of a pump apparatus for transporting liquefied gas. Specific examples of the liquefied gas include liquid hydrogen, liquefied natural gas, liquid oxygen, liquid nitrogen, and liquid ammonia.

As shown in FIG. 1, the pump apparatus includes a pump 1 having an impeller 2, a rotational shaft 5 to which the impeller 2 is fixed, and an electric motor 7 for rotating the rotational shaft 5 and the impeller 2. The pump 1 includes an impeller casing 15 in which the impeller 2 is housed. The impeller casing 15 has a suction port 16 and a discharge port (not shown) for the liquefied gas. The impeller 2 has a liquid inlet 2a that faces the suction port 16. Examples of material of the impeller casing 15 include iron, cast iron, stainless steel, and nickel alloy. The suction port 16 of the pump 1 is directly or indirectly coupled to a storage tank (not shown) in which the liquefied gas is stored.

The pump apparatus includes bearings 31, 32 that rotatably support the rotational shaft 5. The electric motor 7 includes a rotor assembly 21 that is rotatable together with the rotational shaft 5, a motor stator 22 that surrounds the rotor assembly 21, and a motor housing 23 that holds the motor stator 22. The motor housing 23 defines a motor chamber 24 therein. The rotor assembly 21 and the motor stator 22 are disposed in the motor chamber 24. The motor stator 22 has a plurality of coils 26 that surround the rotor assembly 21, and a stator core 27 that holds these coils 26. The motor stator 22 is in surface contact with an inner surface of the motor housing 23. The motor housing 23 is made of aluminum or an aluminum alloy.

The impeller casing 15 has liquefied-gas flow passages 35 formed in a back side of the impeller casing 15. A part of the liquefied gas pressurized by the rotation of the impeller 2 is introduced through the liquefied-gas flow passages 35 into the motor chamber 24. The liquefied gas in the motor chamber 24 cools the rotor assembly 21, the motor stator 22, and the bearings 31, 32, and then passes through a return flow passage 37 formed in the rotational shaft 5 and is returned to a low-pressure side of the pump 1. In this manner, a part of the liquefied gas circulates between the pump 1 and the electric motor 7. Since the liquefied gas has an electrical insulation property, no electric leakage occurs when the coils 26 are immersed in the liquefied gas.

Operation of the pump apparatus is as follows. When the electric motor 7 rotates the rotational shaft 5 and the impeller 2, the liquefied gas flows into the impeller casing 15 through the suction port 16, and further flows into the impeller 2 through the liquid inlet 2a. The liquefied gas is pressurized as the impeller 2 rotates, and is discharged through the discharge port (not shown). A part of the pressurized liquefied gas in the impeller casing 15 passes through the liquefied-gas flow passages 35 into the motor chamber 24. The liquefied gas in the motor chamber 24 cools the rotor assembly 21, the motor stator 22, and the bearings 31 and 32, and then passes through the return flow passage 37 and is returned to the low-pressure side of the pump 1.

FIG. 2 is an enlarged cross-sectional view showing a part of the pump apparatus shown in FIG. 1. As shown in FIG. 2, the rotor assembly 21 includes a motor rotor 40 fixed to the rotational shaft 5, side rings 41 arranged at both sides of the motor rotor 40, and a hermetic cover 42 fixed to outer circumferential surfaces of the side rings 41. The side rings 41 are fixed to an outer circumferential surface of the rotational shaft 5.

The electric motor 7 of the present embodiment is an induction motor. Therefore, the motor rotor 40 includes a plurality of rotor bars 44 arranged along a circumferential direction of the rotational shaft 5, and end rings 45 coupled to both ends of the plurality of rotor bars 44.

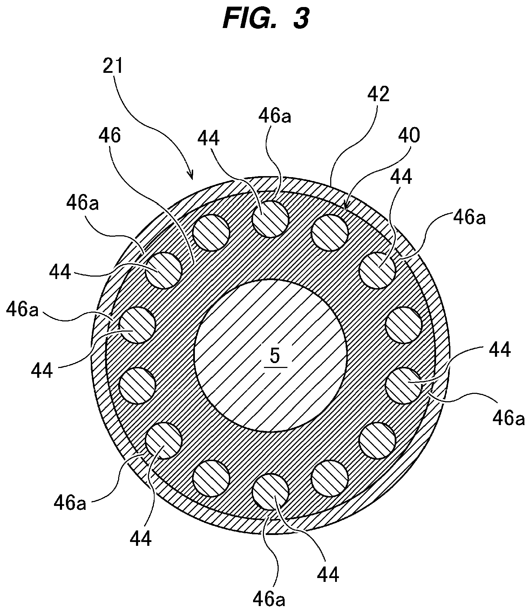

FIG. 3 is a cross-sectional view of the rotor assembly 21 shown in FIG. 2. As shown in FIG. 3, the plurality of rotor bars 44 are arranged along the circumferential direction of the rotational shaft 5. The motor rotor 40 includes a rotor core 46 made of a plurality of laminated electromagnetic steel plates. The plurality of rotor bars 44 are arranged in the rotor core 46. The hermetic cover 42 is in contact with an outer peripheral surface of the rotor core 46.

Although there is no particular limitation on materials of the rotor bars 44 and the end rings 45, examples of the materials of the rotor bars 44 and the end rings 45 include aluminum (particularly pure aluminum) and copper. In one embodiment, the rotor bars 44 and the end rings 45 forms an integral structure manufactured by die casting.

The hermetic cover 42 has a cylindrical shape and is made of glass fiber. An axial length of the hermetic cover 42 is longer than an axial length of the motor rotor 40. The side rings 41 are disposed outwardly of the end rings 45 in the axial direction of the rotational shaft 5. The side rings 41 are in contact with the end rings 45, respectively. In this embodiment, the side rings 41 are also made of glass fiber. The hermetic cover 42 is fixed to the side rings 41 by, for example, an adhesive. The hermetic cover 42 and the side rings 41 are made of the same material and have the same coefficient of linear expansion. Therefore, when the hermetic cover 42 and the side rings 41 are deformed due to a temperature change, no gap is generated at a joint between the hermetic cover 42 and the side rings 41.

The hermetic cover 42 and the side rings 41 form a sealed space in which the motor rotor 40 is disposed. Therefore, the hermetic cover 42 and the side rings 41 can protect the motor rotor 40 from the liquefied gas present in the motor chamber 24 of the electric motor 7. In addition, the hermetic cover 42 made of glass fiber can reinforce the mechanical strength of the motor rotor 40. Therefore, when a large centrifugal force is applied to the motor rotor 40 rotating at an ultra-high speed, the hermetic cover 42 can prevent deformation and damage of each member constituting the motor rotor 40. In particular, as shown in FIG. 3, rotor core bridges 46a of the rotor core 46 are located radially outwardly of the rotor bars 44, respectively. These core bridges 46a are thin and are likely to deform outward. The hermetic cover 42 can prevent the rotor bars 44 and the core bridges 46a from deforming radially outward. Furthermore, since no eddy current is generated in the hermetic cover 42 made of glass fiber, the hermetic cover 42 does not impair the performance of the electric motor 7.

In the embodiment shown in FIG. 3, the rotor core 46 is of a closed type having the rotor core bridges 46a located radially outwardly of the rotor bars 44, while in one embodiment, the rotor core 46 may be of an open type without the rotor core bridges 46a.

A tensile strength of glass fiber is greater than that of stainless steel, which is used as a rotor-can material in typical canned motors. Therefore, the hermetic cover 42 made of glass fiber can be made thinner. As a result, a magnetic gap of the electric motor 7 can be made smaller, and high motor performance can be achieved.

The hermetic cover 42 made of glass fiber is produced by a method called filament winding. Specifically, glass fiber is wound around the outer circumferential surface of the motor rotor 40, while a tensile force is applied to the glass fiber and while an adhesive resin, such as epoxy resin, is applied to the glass fiber. Such glass fiber is called glass-fiber reinforced plastic. This method can increase the airtightness of the hermetic cover 42 made of glass fiber.

In one embodiment, as shown in FIG. 2, the pump apparatus may further include balance rings 51 arranged outwardly of the side rings 41 in the axial direction of the rotational shaft 5. The balance rings 51 are fixed to the outer circumferential surface of the rotational shaft 5. The balance rings 51 are in contact with the hermetic cover 42 and the side rings 41. Each balance ring 51 has an outer diameter equal to or larger than that of the hermetic cover 42. The balance rings 51 function as a bobbin when the hermetic cover 42 is produced using the filament winding method. Furthermore, the balance rings 51 are used for the purpose of correcting a rotation balance of the motor rotor 40. The balance rings 51 are made of a non-magnetic metal, such as austenitic stainless steel.

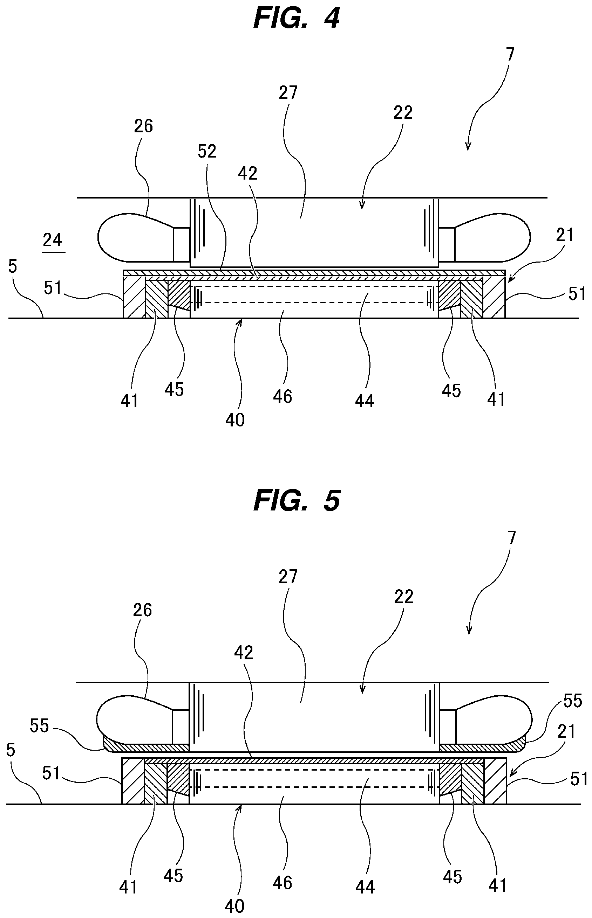

FIG. 4 is an enlarged cross-sectional view showing a part of the pump apparatus according to another embodiment. Configuration and operation of this embodiment that will not be particularly described are the same as those of the embodiments described with reference to FIGS. 1 to 3, and repetitive descriptions thereof will be omitted. As shown in FIG. 4, in this embodiment, the rotor assembly 21 further includes a non-magnetic metal cover 52 fixed to outer circumferential surfaces of the balance rings 51. The non-magnetic metal cover 52 has a cylindrical shape and is disposed outside the hermetic cover 42. The non-magnetic metal cover 52 is made of a non-magnetic metal, such as austenitic stainless steel. The non-magnetic metal cover 52 is fixed to the balance rings 51 by welding.

The rotor assembly 21 of this embodiment has a double sealing structure that hermetically seals the motor rotor 40. Specifically, the hermetic cover 42 and the side rings 41 form a first sealed space in which the motor rotor 40 is disposed, and the non-magnetic metal cover 52 and the balance rings 51 form a second sealed space in which the hermetic cover 42, the side rings 41, and the motor rotor 40 are disposed. The double sealing structure of this embodiment can reliably prevent the liquefied gas from contacting the motor rotor 40.

The hermetic cover 42 made of glass fiber not only seals the motor rotor 40, but also reinforces the mechanical strength of the motor rotor 40. Therefore, the non-magnetic metal cover 52 is just required to be thick enough to seal the motor rotor 40, and the non-magnetic metal cover 52 may be thinner than the hermetic cover 42. For example, the non-magnetic metal cover 52 may have a thickness that is about one-tenth of the thickness of the hermetic cover 42.

FIG. 5 is an enlarged cross-sectional view showing a part of the pump apparatus according to another embodiment. Configuration and operation of this embodiment that will not be particularly described are the same as those of the embodiments described with reference to FIGS. 1 to 3, and repetitive descriptions thereof will be omitted. As shown in FIG. 5, the pump apparatus of this embodiment further includes coil protection covers 55 arranged radially inwardly of ends of the coils 26. Each coil protection cover 55 has a cylindrical shape. The coil protection covers 55 are made of a non-metallic material. Specific examples of the non-metallic material that constitutes the coil protection covers 55 include ceramics and aramid fiber.

The coils 26 are in contact with the liquefied gas. Since the liquefied gas has electrical insulation property, there is no risk of electric leakage. However, the high-speed rotation of the rotor assembly 21 generates high-speed flow of the liquefied gas, which comes into contact with the coils 26. In particular, varnish that binds conducting wires of the coils 26 and enamel layer of the coils 26 become brittle when exposed to the liquefied gas. The high-speed flow of the liquefied gas may peel off the varnish and the enamel layer of the coils 26, destroying the insulation between the coils 26.

According to this embodiment, the coil protective covers 55 can protect the ends of the coils 26 from the high-speed flow of the liquefied gas and can prevent peeling of the varnish and the enamel layer of the coils 26. The coil protective covers 55 described with reference to FIG. 5 can be applied to the embodiment described with reference to FIG. 4 and the embodiments described below.

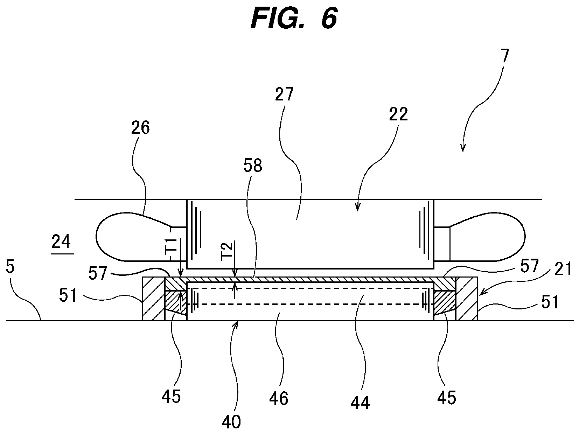

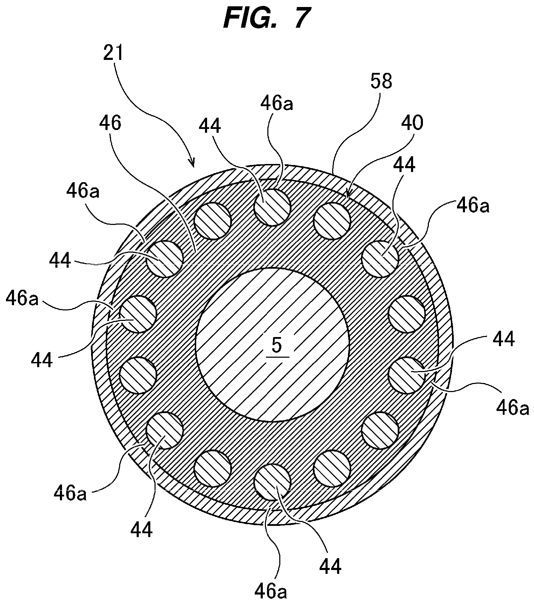

FIG. 6 is an enlarged cross-sectional view showing a part of the pump apparatus according to still another embodiment, and FIG. 7 is a cross-sectional view of the rotor assembly 21 shown in FIG. 6. Configuration and operation of this embodiment that will not be particularly described are the same as those of the embodiments described with reference to FIGS. 1 to 3, and repetitive descriptions thereof will be omitted. In this embodiment, the side rings 41, the hermetic cover 42, and the non-magnetic metal cover 52 are not provided. The balance rings 51 are disposed outwardly of the end rings 45 in the axial direction of the rotational shaft. The balance rings 51 are in contact with the end rings 45, respectively.

The rotor assembly 21 of the electric motor 7 includes first reinforcing covers 57 surrounding the outer circumferential surfaces of the end rings 45, respectively, and a second reinforcing cover 58 surrounding the plurality of rotor bars 44. As shown in FIG. 7, the plurality of rotor bars 44 are arranged along the circumferential direction of the rotational shaft 5. Each first reinforcing cover 57 has an annular shape that contacts the outer circumferential surface of each end ring 45. The second reinforcing cover 58 has a cylindrical shape and is in contact with the outer circumferential surface of the rotor core 46. The second reinforcing cover 58 is disposed outwardly of the plurality of rotor bars 44 in the radial direction of the motor rotor 40, and surrounds the entireties of the plurality of rotor bars 44 and the rotor core 46.

The first reinforcing covers 57 and the second reinforcing cover 58 are made of non-magnetic material. In this embodiment, the first reinforcing covers 57 and the second reinforcing cover 58 are made of glass fiber. In this embodiment, the first reinforcing covers 57 and the second reinforcing cover 58 form an integral structure. The first reinforcing covers 57 are disposed on both sides of the second reinforcing cover 58. The first reinforcing covers 57 and the second reinforcing cover 58 made of glass fiber are produced using the filament winding method described above. The balance rings 51 function as a bobbin when the first reinforcing covers 57 and the second reinforcing cover 58 are produced using the filament winding method.

A thickness T1 of each first reinforcing cover 57 is greater than a thickness T2 of the second reinforcing cover 58. In the embodiment shown in FIG. 6, an outer diameter of each end ring 45 is smaller than an outer diameter of the rotor core 46. Specifically, an outer diameter of each first reinforcing cover 57 is the same as an outer diameter of the second reinforcing cover 58, while an inner diameter of each first reinforcing cover 57 is smaller than an inner diameter of the second reinforcing cover 58.

The balance rings 51 are located outwardly of the first reinforcing covers 57 in the axial direction of the rotational shaft 5, and are in contact with the first reinforcing covers 57, respectively. Therefore, the balance rings 51, the first reinforcing covers 57, and the second reinforcing cover 58, which provide an integral structure, form a space that hermetically encloses the entire motor rotor 40 therein, and can prevent the liquefied gas from contacting the motor rotor 40.

The first reinforcing covers 57 are provided to reinforce the end rings 45 disposed outwardly of the rotor core 46. Specifically, the first reinforcing covers 57 can prevent the end rings 45 from deforming radially outward due to the centrifugal force generated in the end rings 45 when the motor rotor 40 rotates at a high speed.

The second reinforcing cover 58 is provided to reinforce the rotor core 46 and the rotor bars 44. Specifically, the second reinforcing cover 58 can prevent the rotor core 46 and the rotor bars 44 from deforming radially outward due to the centrifugal force generated in the rotor core 46 and the rotor bars 44 when the motor rotor 40 rotates at a high speed. In particular, as shown in FIG. 7, the rotor core bridge 46a of the rotor core 46 located radially outwardly of each rotor bar 44 is thin, and the core bridge 46a may easily deform outward. The second reinforcing cover 58 can prevent the rotor bars 44 and the core bridges 46a from deforming radially outward.

In the embodiment shown in FIG. 7, the rotor core 46 is of a closed type having the rotor core bridges 46a radially outwardly of the rotor bars 44, respectively, while in one embodiment, the rotor core 46 may be of an open type having no rotor core bridges 46a.

The rotor bars 44 are disposed inside the rotor core 46, whereas the end rings 45 are disposed outside the rotor core 46. For this reason, the end rings 45 may be deformed outward due to the centrifugal force. According to this embodiment, the thickness T1 of each first reinforcing cover 57 is greater than the thickness T2 of the second reinforcing cover 58, so that the first reinforcing covers 57 can prevent the deformation of the end rings 45. In addition, the balance rings 51 that contact the end rings 45 can prevent the end rings 45 from deforming axially outward. Therefore, the configuration of this embodiment can prevent the radial and axial deformation of the end rings 45.

The first reinforcing covers 57 and the second reinforcing cover 58 can prevent the deformation of the motor rotor 40 including the rotor bars 44 and the end rings 45, thereby preventing vibration of the motor rotor 40 when rotating at a high speed and preventing a reduction in service life of the bearings 31, 32 (see FIG. 1).

The balance rings 51 are in contact with the end rings 45, respectively, and therefore have a function of releasing heat of the end rings 45. Specifically, heat generated in the rotor bars 44 and the end rings 45 is transferred to the balance rings 51 made of a non-magnetic metal, and is released from the balance rings 51. The balance rings 51 are in contact with the liquefied gas, so that the heat is transferred to the liquefied gas in the motor chamber 24. This embodiment can prevent overheating of the motor rotor 40 including the rotor bars 44 and the end rings 45.

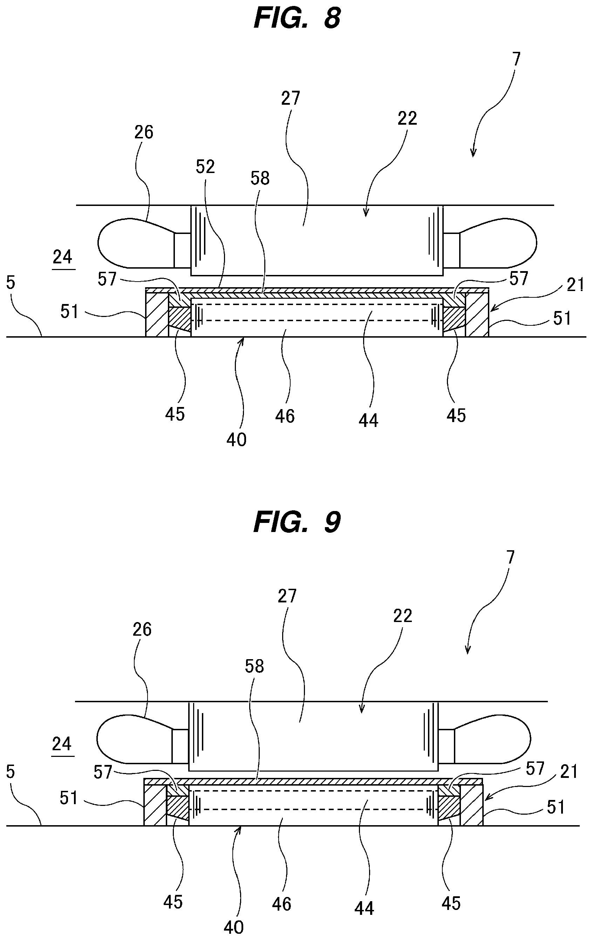

FIG. 8 is an enlarged cross-sectional view showing a part of the pump apparatus according to still another embodiment. Configuration and operation of this embodiment that will not be particularly described are the same as those of the embodiments described with reference to FIGS. 7 and 8, and repetitive descriptions thereof will be omitted. The rotor assembly 21 of the electric motor 7 further includes a non-magnetic metal cover 52 fixed to outer circumferential surfaces of the balance rings 51. The non-magnetic metal cover 52 has a cylindrical shape and is in contact with the outer circumferential surfaces of the first reinforcing covers 57 and the second reinforcing cover 58.

The non-magnetic metal cover 52 is disposed outwardly of the first reinforcing covers 57 and the second reinforcing cover 58 in the radial direction of the motor rotor 40, and surrounds the entireties of the first reinforcing covers 57 and the second reinforcing cover 58. The non-magnetic metal cover 52 is made of a non-magnetic metal, such as austenitic stainless steel. The non-magnetic metal cover 52 is fixed to the balance rings 51 by welding.

The non-magnetic metal cover 52 and the balance rings 51 form a sealed space in which the first reinforcing covers 57, the second reinforcing cover 58, and the motor rotor 40 are disposed. The configuration of this embodiment can reliably prevent the liquefied gas from contacting the motor rotor 40. Therefore, the embodiment described with reference to FIG. 8 is suitable for a case where a highly corrosive liquefied gas (e.g., liquid ammonia) is used.

FIG. 9 is an enlarged cross-sectional view showing a part of the pump apparatus according to another embodiment. Configuration and operation of this embodiment that will not be particularly described are the same as those of the embodiments described with reference to FIGS. 7 and 8, and repetitive descriptions thereof will be omitted. In this embodiment, the second reinforcing cover 58 is made of a non-magnetic metal, and the second reinforcing cover 58 is coupled to the balance rings 51.

The second reinforcing cover 58 surrounds the motor rotor 40 (including the rotor bars 44 and the end rings 45) and the first reinforcing covers 57. An axial length of the second reinforcing cover 58 is greater than an axial length of the motor rotor 40, and a central portion of the second reinforcing cover 58 is in contact with the outer circumferential surface of the rotor core 46. The outer circumferential surfaces of the first reinforcing covers 57 are in contact with the inner circumferential surface of the second reinforcing cover 58. As with the embodiment described with reference to FIGS. 6 and 7, the second reinforcing cover 58 can prevent the rotor core 46 and the rotor bars 44 from being deformed radially outward due to the centrifugal force generated in the rotor core 46 and the rotor bars 44 when the motor rotor 40 is rotating at a high speed.

An example of the non-magnetic metal constituting the second reinforcing cover 58 includes stainless steel (more specifically, austenitic stainless steel). In the embodiment shown in FIG. 9, both ends of the second reinforcing cover 58 are fixed to the outer circumferential surfaces of the balance rings 51. The second reinforcing cover 58 is fixed to the balance rings 51 by welding. Therefore, the second reinforcing cover 58 and the balance rings 51 form a sealed space therein. The motor rotor 40 (including the rotor bars 44 and the end rings 45) and the first reinforcing covers 57 are disposed in the sealed space formed by the second reinforcing cover 58 and the balance rings 51.

The first reinforcing covers 57 are made of glass fiber, as well as the embodiment shown in FIG. 6. As with the embodiment described with reference to FIG. 6, the first reinforcing covers 57 can prevent the end rings 45 from deforming radially outwardly due to the centrifugal force generated in the end rings 45 when the motor rotor 40 rotates at a high speed.

According to this embodiment, the second reinforcing cover 58 and the balance rings 51 made of a non-magnetic metal can reliably prevent the liquefied gas from contacting the motor rotor 40. Therefore, the embodiment described with reference to FIG. 9 is suitable for a case where a highly corrosive liquefied gas (e.g., liquid ammonia) is used.

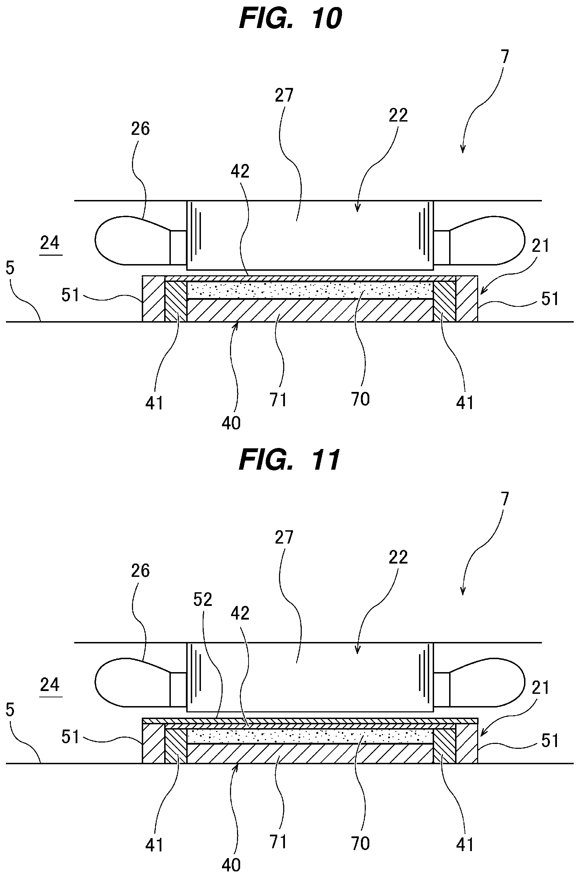

FIG. 10 is an enlarged cross-sectional view showing a part of the pump apparatus according to still another embodiment. Configuration and operation of this embodiment that will not be particularly described are the same as those of the embodiments described with reference to FIGS. 1 to 3, and repetitive descriptions thereof will be omitted. The electric motor 7 of this embodiment is a permanent-magnet synchronous motor including a motor rotor 40 having permanent magnets 70. Specifically, as shown in FIG. 10, the rotor assembly 21 has a plurality of permanent magnets 70 arranged along the circumferential direction of the rotational shaft 5, and a rotor yoke 71 that holds these permanent magnets 70. It is noted that only one permanent magnet 70 is illustrated in FIG. 10. The rotor yoke 71 is made of laminated electromagnetic steel sheets or ferromagnetic metal.

The side rings 41 are arranged on both sides of the motor rotor 40, i.e., on both sides of the permanent magnets 70. The side rings 41 are made of glass fiber. Since the glass fiber has a coefficient of linear expansion close to that of the material constituting the rotor yoke 71, stress is unlikely to be generated during thermal deformation. The motor rotor 40 including the permanent magnets 70 is arranged in a sealed space formed by the hermetic cover 42 and the side rings 41. Therefore, the liquefied gas, such as liquid hydrogen, does not come into contact with the motor rotor 40. In particular, rare earth magnets used in a synchronous motor tend to absorb hydrogen and are brittle to hydrogen. According to this embodiment, the hermetic cover 42 and the side rings 41 can protect the permanent magnets 70 in the motor rotor 40 from the liquefied gas, such as liquid hydrogen.

Magnetic paths are formed on both sides of the permanent magnets 70, and these magnetic paths pass through the side rings 41. Due to discontinuities in the circumferential direction of the stator core 27, ripples in a rotating magnetic field are generated during rotation of the rotor assembly 21. As a result, the strength of the magnetic fields on both sides of the permanent magnets 70 changes periodically. Since the side rings 41 of this embodiment are made of glass fiber, which is a non-metallic and non-magnetic material, the periodic changes in the strength of the magnetic fields do not generate eddy currents within the side rings 41.

FIG. 11 is a diagram showing an embodiment in which the non-magnetic metal cover 52 described with reference to FIG. 4 is applied to the embodiment described with reference to FIG. 10. Although not shown in the drawings, the coil protection covers 55 described with reference to FIG. 5 may be applied to the embodiment described with reference to FIG. 10. Furthermore, both the non-magnetic metal cover 52 described with reference to FIG. 4 and the coil protection covers 55 described with reference to FIG. 5 may be applied to the embodiment described with reference to FIG. 10.

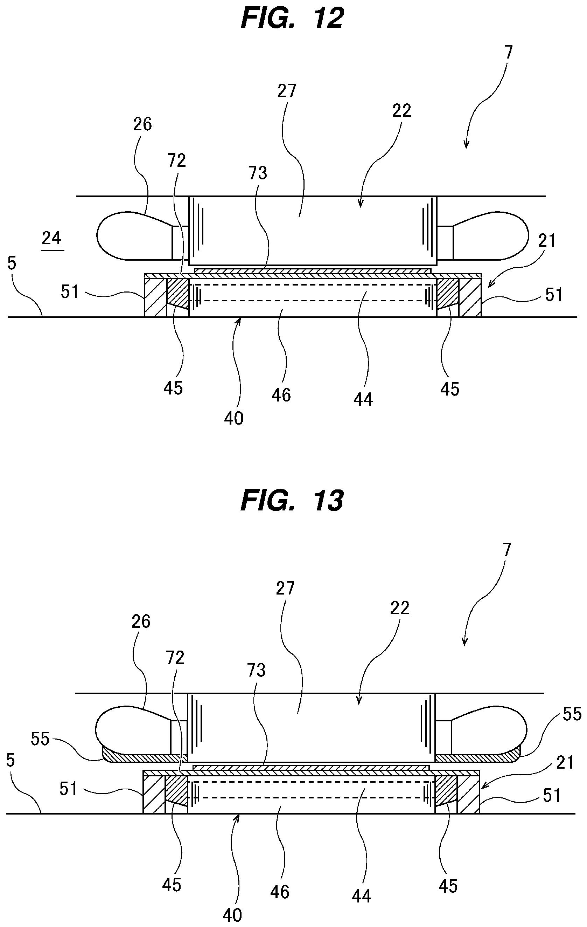

FIG. 12 is an enlarged cross-sectional view showing a part of the pump apparatus according to another embodiment. Configuration and operation of this embodiment that will not be particularly described are the same as those of the embodiments described with reference to FIGS. 1 to 3, and repetitive descriptions thereof will be omitted.

The rotor assembly 21 includes balance rings 51 arranged on both sides of the motor rotor 40, a hermetic cover 72 fixed to outer circumferential surfaces of the balance rings 51, and a cylindrical reinforcing cover 73 arranged on an outer circumferential surface of the hermetic cover 72. The hermetic cover 72 has a cylindrical shape. The hermetic cover 72 is made of a non-magnetic metal, and the cylindrical reinforcing cover 73 is made of glass fiber. The hermetic cover 72 and the balance rings 51 are made of a non-magnetic metal, such as austenitic stainless steel. The hermetic cover 72 is fixed to the balance rings 51 by welding.

The hermetic cover 72 and the balance rings 51 form a sealed space in which the motor rotor 40 including the rotor bars 44, the end rings 45, and the rotor core 46 is disposed. Therefore, the motor rotor 40 can be protected from the liquefied gas present in the motor chamber 24 of the electric motor 7. The cylindrical reinforcing cover 73 is disposed radially outwardly of the motor rotor 40. The cylindrical reinforcing cover 73 made of glass fiber can reinforce the mechanical strength of the motor rotor 40. Therefore, when a large centrifugal force is applied to the motor rotor 40 rotating at an ultra-high speed, the cylindrical reinforcing cover 73 can prevent deformation and damage of each member constituting the motor rotor 40.

In this embodiment, the side rings 41 are not provided, and the end rings 45 are in contact with the balance rings 51, respectively. In the embodiment shown in FIG. 12, both ends of the cylindrical reinforcing cover 73 are located inwardly of the balance rings 51 in the axial direction of the rotational shaft 5. In other words, the cylindrical reinforcing cover 73 is not provided radially outwardly of the balance rings 51. With this configuration, heat generated in the motor rotor 40 is released through the end rings 45, the balance rings 51, and the hermetic cover 72 which are made of metal.

In FIG. 12, in order to further improve the heat dissipation effect, both ends of the cylindrical reinforcing cover 73 are located inwardly of the end rings 45 in the axial direction of the rotational shaft 5. In other words, the cylindrical reinforcing cover 73 is not provided radially outwardly of the balance rings 51 and the end rings 45. This configuration can increase an exposed area of the hermetic cover 72 made of a non-magnetic metal, and therefore, the heat dissipation from the hermetic cover 72 is promoted.

FIG. 13 is a diagram showing an embodiment in which the coil protection covers 55 described with reference to FIG. 5 are applied to the embodiment described with reference to FIG. 12.

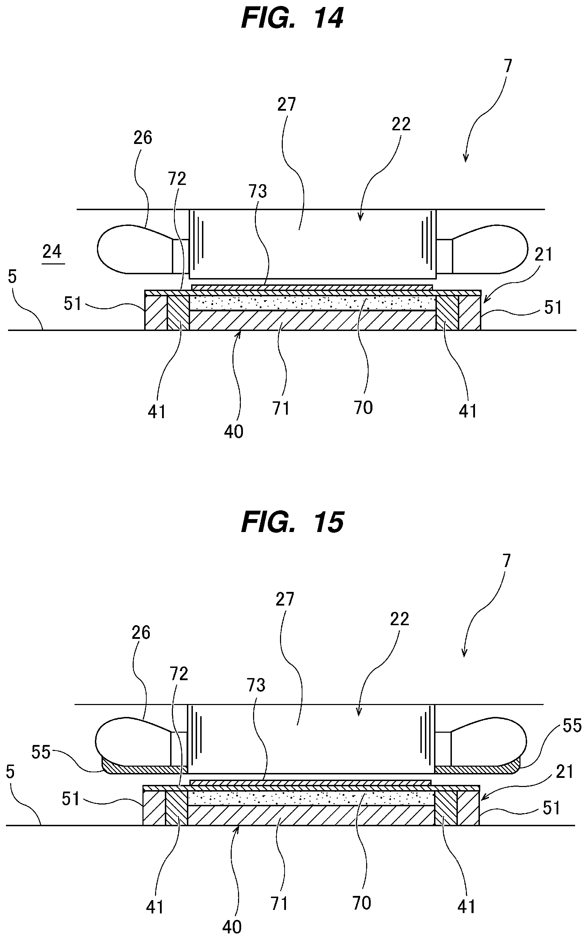

FIG. 14 is an enlarged cross-sectional view showing a part of the pump apparatus according to still another embodiment. Configuration and operation of this embodiment that will not be particularly described are the same as those of the embodiments described with reference to FIGS. 1 to 13, and repetitive descriptions thereof will be omitted. The electric motor 7 of this embodiment is a permanent-magnet synchronous motor including a motor rotor 40 having permanent magnets 70. Specifically, as shown in FIG. 14, the rotor assembly 21 has a plurality of permanent magnets 70 arranged along the circumferential direction of the rotational shaft 5, and a rotor yoke 71 that holds these permanent magnets 70. It is noted that only one permanent magnet 70 is illustrated in FIG. 14. The rotor yoke 71 is made of laminated electromagnetic steel sheets or ferromagnetic metal.

The side rings 41 are disposed on both sides of the motor rotor 40, i.e., on both sides of the permanent magnets 70. The side rings 41 are made of glass fiber. Magnetic paths are formed on both sides of the permanent magnets 70, and these magnetic paths pass through the side rings 41. Due to discontinuities in the circumferential direction of the stator core 27, ripples in a rotating magnetic field are generated during rotation of the rotor assembly 21. As a result, the strength of the magnetic fields on both sides of the permanent magnets 70 changes periodically. Since the side rings 41 of this embodiment are made of glass fiber, which is a non-metallic and non-magnetic material, the periodic changes in the strength of the magnetic fields do not generate eddy currents within the side rings 41.

Both ends of the cylindrical reinforcing cover 73 are located inwardly of the side rings 41 in the axial direction of the rotational shaft 5. In other words, the cylindrical reinforcing cover 73 is not provided radially outwardly of the balance rings 51 and the side rings 41. This configuration can increase an exposed area of the hermetic cover 72 made of a non-magnetic metal, and therefore, the heat dissipation from the hermetic cover 72 is promoted.

FIG. 15 is a diagram showing an embodiment in which the coil protection covers 55 described with reference to FIG. 5 are applied to the embodiment described with reference to FIG. 14.

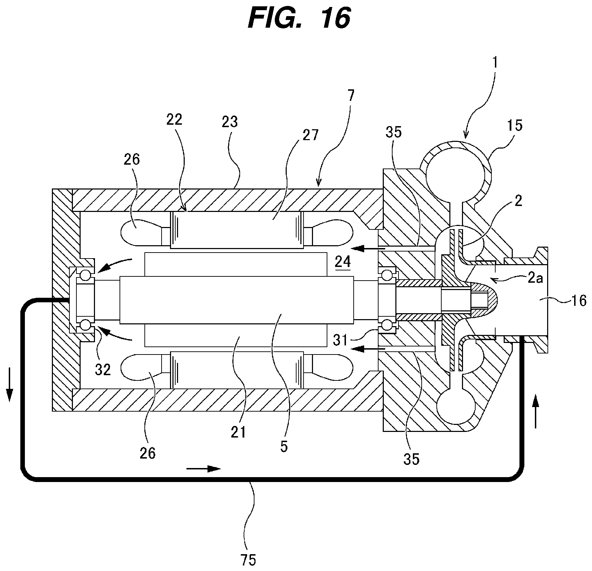

FIG. 16 is a diagram showing yet another embodiment of the pump apparatus. Configuration and operation of this embodiment that will not be particularly described are the same as those of the embodiments described with reference to FIGS. 1 and 2, and repetitive descriptions thereof will be omitted. The pump apparatus of the embodiment shown in FIG. 16 includes a return line 75, instead of the return flow passage 37 provided in the rotational shaft 5. The return line 75 is arranged outside the motor housing 23 and the impeller casing 15. One end of the return line 75 is coupled to the motor housing 23, and the other end of the return line 75 is coupled to the suction side of the impeller casing 15. The suction side of the impeller casing 15 is located between the impeller 2 and the suction port 16.

A part of the liquefied gas pressurized by the rotation of the impeller 2 is introduced into the motor chamber 24 through the liquefied-gas flow passages 35. The liquefied gas in the motor chamber 24 cools the rotor assembly 21, the motor stator 22, and the bearings 31 and 32, and is then returned to the low-pressure side of the pump 1 through the return line 75.

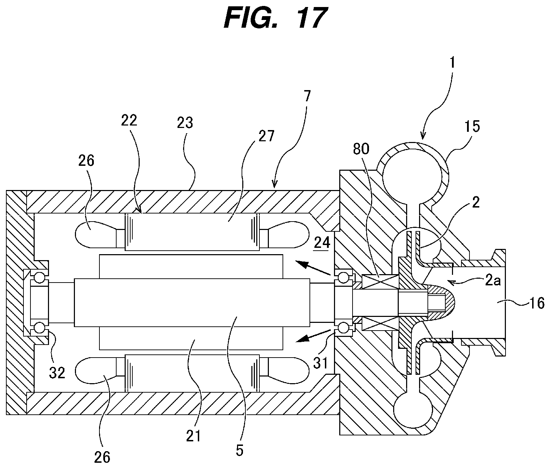

FIG. 17 is a diagram showing yet another embodiment of the pump apparatus. Configuration and operation of this embodiment that will not be particularly described are the same as those of the embodiments described with reference to FIGS. 1 to 3, and repetitive descriptions thereof will be omitted. The pump apparatus of the embodiment shown in FIG. 17 includes a shaft seal device 80 arranged between the impeller 2 and the electric motor 7. Examples of the shaft seal device 80 include a labyrinth seal and a mechanical seal. In the embodiment shown in FIG. 17, the shaft seal device 80 is arranged at the back side of the impeller 2, i.e., between the impeller 2 and the bearing 31. In one embodiment, the shaft seal device 80 may be arranged at the back side of the bearing 31, i.e., between the bearing 31 and the electric motor 7.

In this embodiment, the liquefied-gas flow passages 35 shown in FIG. 1 are not provided. A small amount of liquefied gas in the impeller casing 15 passes through the shaft seal device 80. When and/or after the liquefied gas passes through the shaft seal device 80, the liquefied gas vaporizes to form boil-off gas. Thus, the motor chamber 24 in the motor housing 23 is filled with the boil-off gas, so that the rotor assembly 21 and the motor stator 22 of the electric motor 7 are exposed to the boil-off gas. The boil-off gas in the motor chamber 24 cools the rotor assembly 21, the motor stator 22, and the bearings 31 and 32.

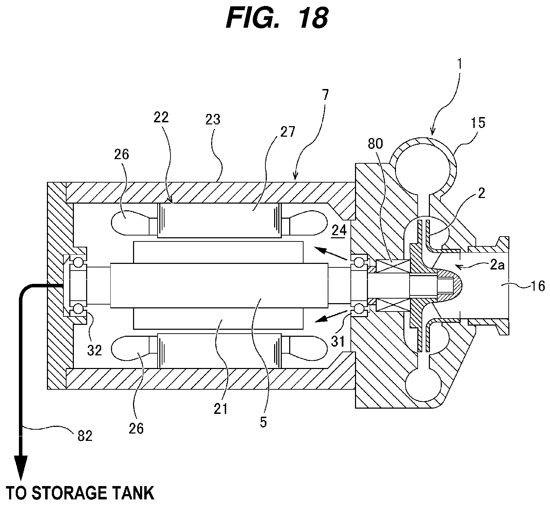

FIG. 18 is a modified example of the embodiment shown in FIG. 17. As shown in FIG. 18, the motor housing 23 may be coupled to a storage tank (not shown) in which liquefied gas is stored via a boil-off gas return line 82. One end of the boil-off gas return line 82 is coupled to the motor housing 23, and the other end of the boil-off gas return line 82 is coupled to a gas-phase part of the storage tank. The boil-off gas in the motor chamber 24 cools the rotor assembly 21, the motor stator 22, and the bearings 31 and 32, and is then returned to the storage tank (not shown) through the boil-off gas return line 82.

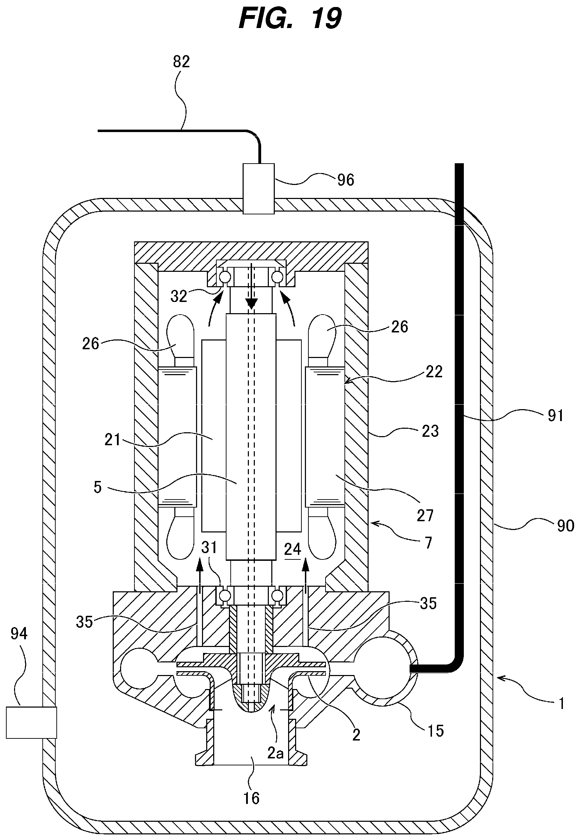

FIG. 19 is a diagram showing yet another embodiment of the pump apparatus. Configuration and operation of this embodiment that will not be particularly described are the same as those of the embodiments described with reference to FIGS. 1 to 3, and repetitive descriptions thereof will be omitted. The pump apparatus of the embodiment shown in FIG. 19 further includes a suction container 90 surrounding the pump 1, the rotational shaft 5, and the electric motor 7. The pump apparatus further includes a liquefied-gas discharge pipe 91 coupled to the discharge port (not shown) of the pump 1.

The suction container 90 is a fluid container into which the liquefied gas is introduced. More specifically, the suction container 90 has a suction port 94 coupled to a storage tank (not shown) in which the liquefied gas is stored. The liquefied gas is supplied from the storage tank to the suction container 90 and introduced into the suction container 90 through the suction port 94. The pump 1 and the electric motor 7 are entirely immersed in the liquefied gas in the suction container 90.

The liquefied-gas discharge pipe 91 extends from the discharge port (not shown) of the pump 1 to an outside of the suction container 90. A part of the liquefied gas in the suction container 90 is vaporized to form boil-off gas by heat generated by the electric motor 7 or heat input from outside the suction container 90. The suction container 90 has a boil-off gas discharge port 96 for discharging the boil-off gas generated in the suction container 90. The boil-off gas discharge port 96 is coupled to the boil-off gas return line 82. The boil-off gas is returned from the suction container 90 to the storage tank (not shown) through the boil-off gas discharge port 96 and the boil-off gas return line 82.

The above-described embodiments including the embodiments described with reference to FIGS. 4 to 15 can be applied to the embodiments described with reference to FIGS. 16 to 19. Furthermore, all of the above-described embodiments may be appropriately combined as long as they can be practiced. For example, the embodiment shown in FIG. 18 may be combined with the embodiment shown in FIG. 19.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a pump apparatus for delivering cryogenic liquefied gas, such as liquid hydrogen or liquefied natural gas, and is particularly applicable to a pump apparatus having an electric motor as a drive source for a pump.

### Reference Signs List

- 1: pump
- 2: impeller
- 2a: liquid inlet
- 5: rotational shaft
- 7: electric motor
- 15: impeller casing
- 16: suction port
- 21: rotor assembly
- 22: motor stator
- 23: motor housing
- 24: motor chamber
- 26: coil
- 27: stator core
- 31, 32: bearing
- 35: liquefied-gas flow passage
- 37: return passage
- 40: motor rotor
- 41: side ring
- 42: hermetic cover
- 44: rotor bar
- 45: end ring
- 46: rotor core
- 51: balance ring
- 52: non-magnetic metal cover
- 55: coil protection cover
- 57: first reinforcing cover
- 58: second reinforcing cover
- 70: permanent magnet
- 71: rotor yoke
- 72: hermetic cover
- 73: cylindrical reinforcing cover
- 75: return line
- 80: shaft seal device
- 82: boil-off gas return line
- 90: suction container
- 91: liquefied-gas discharge pipe
- 94: suction port
- 96: boil-off gas discharge port

## Claims

1. A pump apparatus for liquefied gas, comprising:
a pump having an impeller;
a rotational shaft to which the impeller is fixed; and
an electric motor configured to rotate the rotational shaft and the impeller,
the electric motor including:
a rotor assembly that is rotatable together with the rotational shaft; and
a motor stator having coils and a stator core surrounding the rotor assembly,
the rotor assembly including:
a motor rotor fixed to the rotational shaft;
side rings disposed at both sides of the motor rotor; and
a hermetic cover fixed to outer circumferential surfaces of the side rings, the hermetic cover being made of glass fiber.

2. The pump apparatus according to claim 1, wherein the side rings are made of glass fiber.

3. The pump apparatus according to claim 1, further comprising:
balance rings arranged outwardly of the side rings, respectively, in an axial direction of the rotational shaft; and
a non-magnetic metal cover fixed to outer peripheral surfaces of the balance rings,
wherein the non-magnetic metal cover and the balance rings form a sealed space in which the hermetic cover, the side rings, and the motor rotor are disposed.

4. The pump apparatus according to claim 1, further comprising coil protective covers disposed radially inwardly of ends of the coils, the coil protective covers being made of a non-metallic material.

5. A pump apparatus for liquefied gas, comprising:
a pump having an impeller;
a rotational shaft to which the impeller is fixed; and
an electric motor configured to rotate the rotational shaft and the impeller,
the electric motor including:
a rotor assembly that is rotatable together with the rotational shaft; and
a motor stator having coils and a stator core surrounding the rotor assembly,
the rotor assembly including:
a motor rotor fixed to the rotational shaft;
balance rings disposed at both sides of the motor rotor;
a hermetic cover fixed to outer peripheral surfaces of the balance rings; and
a cylindrical reinforcing cover disposed on an outer peripheral surface of the hermetic cover, the hermetic cover being made of a non-magnetic metal, and the cylindrical reinforcing cover being made of glass fiber.

6. The pump apparatus according to claim 5, wherein both ends of the cylindrical reinforcing cover are located inwardly of the balance rings in an axial direction of the rotational shaft.

7. The pump apparatus according to claim 6, wherein the motor rotor includes a plurality of rotor bars arranged along a circumferential direction of the rotational shaft, and end rings fixed to both ends of the plurality of rotor bars, and
both ends of the cylindrical reinforcing cover are located inwardly of the end rings in the axial direction of the rotational shaft.

8. The pump apparatus according to claim 5, further comprising side rings arranged at both sides of the motor rotor,
wherein the motor rotor has a plurality of permanent magnets arranged along a circumferential direction of the rotational shaft, and
the side rings are made of a non-metallic material.

9. The pump apparatus according to claim 8, wherein the side rings are made of glass fiber.

10. The pump apparatus according to claim 5, further comprising coil protective covers disposed radially inwardly of ends of the coils, the coil protective covers being made of a non-metallic material.

11. A pump apparatus for liquefied gas, comprising:
a pump having an impeller;
a rotational shaft to which the impeller is fixed; and
an induction motor configured to rotate the rotational shaft and the impeller,
the induction motor including:
a rotor assembly that is rotatable together with the rotational shaft; and
a motor stator having coils and a stator core surrounding the rotor assembly,
the rotor assembly including:
a motor rotor having a plurality of rotor bars and end rings, the plurality of rotor bars being arranged along a circumferential direction of the rotational shaft, the end rings being coupled to both ends of the plurality of rotor bars;
balance rings in contact with the end rings, respectively;
first reinforcing covers surrounding outer circumferential surfaces of the end rings, respectively; and
a second reinforcing cover surrounding the plurality of rotor bars.

12. The pump apparatus according to claim 11, wherein the first reinforcing covers are made of glass fiber.

13. The pump apparatus according to claim 11, wherein the second reinforcing cover is made of glass fiber.

14. The pump apparatus according to claim 11, wherein a thickness of each of the first reinforcing covers is larger than a thickness of the second reinforcing cover.

15. The pump apparatus according to claim 11, wherein the second reinforcing cover is made of a non-magnetic metal, and the second reinforcing cover is fixed to the balance rings.
